# EUROPÄISCHE PATENTSCHRIFT

(11) **EP 3 677 421 B1**
(45) Veröffentlichungstag und Bekanntmachung des Hinweises auf die Patenterteilung: **31.03.2021**
(21) Anmeldenummer: 20150030.3
(22) Anmeldetag: 02.01.2020
(51) Int. Cl.: B32B 3/26, B32B 1/00, B32B 3/08, B32B 3/28, B32B 3/18, B32B 7/023, B32B 7/12, B32B 15/08, B32B 27/06, B32B 27/28, B32B 27/30, B32B 27/36, F21V 8/00, F21V 14/00

(54) **BELEUCHTUNGSVORRICHTUNG**
ILLUMINATING DEVICE
DISPOSITIF LUMINEUX

(30) Priorität: 03.01.2019 DE 102019100074
(43) Veröffentlichungstag der Anmeldung: 08.07.2020
(73) Patentinhaber: ledxon GmbH, 84144 Geisenhausen (DE)
(72) Erfinder: Garufo, Gabriel, 84028 Landshut (DE); Hiebinger, Christoph, 85354 Freising (DE)
(74) Vertreter: Lichtnecker, Markus Christoph

(56) Entgegenhaltungen:
- WO-A1-2010/122458
- US-A1- 2017 254 518

## Beschreibung

Die Erfindung betrifft eine Beleuchtungsvorrichtung, umfassend eine Leuchtschicht, wobei die Leuchtschicht wenigstens eine Lichtaustrittseinheit aufweist, und eine flächige Deckschicht mit mehreren Öffnungsabschnitten.

Beispielsweise sind Beleuchtungsvorrichtungen an abgehängten Decken bekannt. Die Leuchtschicht wird dabei z.B. durch LEDs gebildet, welche Licht aussenden. Die abgehängte Decke bildet eine flächige Deckschicht mit mehreren Öffnungsabschnitten und sorgt dafür, dass das Licht nur an bestimmten, vorgegebenen Positionen austreten kann. So kann z.B. die Illusion eines Sternenhimmels erzeugt werden.

Die Einsatzmöglichkeiten und Funktionen derartiger Beleuchtungsvorrichtungen sind jedoch stark begrenzt. So kann das austretende Licht z.B. lediglich elektronisch beeinflusst werden. Beispielsweise können die LEDs mittels einer Steuerung gedimmt oder ausgeschaltet werden. Die Abstrahlrichtung und/oder der Abstrahlwinkel können jedoch nicht verändert werden.

US 2017/0254518 A1 offenbart eine Beleuchtungsvorrichtung mit einer flächigen, flexiblen Leuchtschicht, wobei die Leuchtschicht wenigstens eine Lichtaustrittseinheit aufweist. Die Leuchtschicht ist mit einer Deckschicht verbunden.

WO 2010/122458 A1 offenbart ein entsprechendes lichtemittierendes Textil.

Es ist eine Aufgabe der Erfindung, eine Beleuchtungsvorrichtung sowie ein Verfahren zur Herstellung einer Beleuchtungsvorrichtung zu schaffen, bei der/dem das aus der Beleuchtungsvorrichtung austretende Licht auf einfache und/oder in vielfältiger Weise beeinflusst werden kann.

Die Lösung dieser Aufgabe erfolgt durch die Beleuchtungsvorrichtung sowie das Verfahren der unabhängigen Ansprüche.

Die erfindungsgemäße Beleuchtungsvorrichtung umfasst eine flächige, biegsame Leuchtschicht, wobei die Leuchtschicht wenigstens eine Lichtaustrittseinheit aufweist.

Vorzugsweise sind mehrere, z.B. mindestens zwei, drei, vier, fünf, sechs, sieben, acht, neun, zehn, zwanzig, dreißig, vierzig, fünfzig oder mehr, Lichtaustrittseinheiten vorgesehen. Die Anzahl an Lichtaustrittseinheiten hängt insbesondere von der Größe der Leuchtschicht ab.

Die Lichtaustrittseinheiten sind vorzugweise nebeneinander über die Leuchtschicht verteilt angeordnet. So kann z.B. eine gleichmäßig leuchtende Schicht bereitgestellt werden.

Die Beleuchtungsvorrichtung wird insbesondere nicht von außen angestrahlt, sondern leuchtet selbst. Eine externe Lichtquelle ist vorzugsweise nicht vorgesehen. Die Leuchtschicht kann beispielsweise ein transparentes und/oder transluzentes optisches Material umfassen. Das aus der Lichtaustrittseinheit austretende Licht wird in der Leuchtschicht vorzugsweise zumindest im Wesentlichen nicht beeinflusst.

Beispielsweise kann die Leuchtschicht ein Kunststoffmaterial, z.B. Polymethylmethacrylat (PMMA), Polycarbonat (PC), Silikon oder ein Leiterplattenmaterial aufweisen oder daraus bestehen.

Auch eine Elektrifizierung, insbesondere Verkabelung, der Lichtaustrittseinheit kann in der Leuchtschicht angeordnet sein.

Die Lichtaustrittseinheit und/oder eine Elektrifizierung der Lichtaustrittseinheit kann innerhalb der Leuchtschicht angeordnet sein. Alternativ kann die Leuchtschicht auch beispielsweise zwei transparente Schichten aufweisen, welche die Lichtaustrittseinheit und/oder die Elektrifizierung umschließen.

Die Leuchtschicht kann eine, zwei, drei, vier, fünf, sechs, sieben, acht, neun, zehn oder mehr Schichten umfassen.

Die Leuchtschicht ist flächig und biegsam ausgebildet, beispielsweise folienartig oder plattenartig. Auf diese Weise kann die Leuchtschicht gebogen werden. Eine individuelle Anpassung an den jeweiligen Bestimmungsort wird dadurch ermöglicht.

Die Beleuchtungsvorrichtung umfasst ferner eine flächige, insbesondere biegsame Deckschicht mit mehreren Öffnungsabschnitten, die zwischen einer geschlossenen Warteposition und einer geöffneten Leuchtposition verstellbar sind.

In der Warteposition können die Öffnungsabschnitte vorzugsweise zumindest im Wesentlichen vollständig geschlossen sein. In der Leuchtposition können die Öffnungsabschnitte hingegen vorzugsweise teilweise oder vollständig geöffnet sein. Licht kann in der Leuchtposition nach außen austreten.

Die Öffnungsabschnitte können z.B. reversibel verstellbar sein. So können die Öffnungsabschnitte insbesondere wieder ohne Krafteinwirkung aus der Leuchtposition in die Warteposition zurückkehren.

Die Öffnungen sind vorzugsweise frei, d.h. diese sind nicht durch ein Material gefüllt, welches gegebenenfalls die Flexibilität einschränken würde.

Durch die Verstellbarkeit der Öffnungsabschnitte kann das austretende Licht beispielsweise auf mechanische Weise beeinflusst werden. Die Leuchtschicht muss somit z.B. nicht elektronisch gesteuert, insbesondere ausgeschalten werden, damit kein Licht austritt. So kann die Leuchtschicht insbesondere stets mit konstanter Helligkeit leuchten. Die Beeinflussung des Lichts erfolgt vorzugsweise ausschließlich über die Öffnungsabschnitte.

Mit Hilfe der Öffnungsabschnitte kann das austretende Licht auf einfache und/oder in vielfältiger Weise beeinflusst werden. Beispielsweise können die Öffnungsabschnitte mechanisch geschlossen werden. Es tritt dann insbesondere kein Licht nach außen aus, obwohl die Leuchtschicht gegebenenfalls aktiv ist.

Die Deckschicht ist flächig und insbesondere biegsam oder starr ausgebildet, beispielsweise folienartig oder plattenartig. Auf diese Weise kann die Deckschicht z.B. gebogen werden. Eine individuelle Anpassung an den jeweiligen Bestimmungsort wird dadurch ermöglicht. Eine starre Deckschicht kann beispielsweise bei einer Verwendung als Laden- und/oder Regalbeleuchtung sinnvoll sein. So kann die Beleuchtungsvorrichtung z.B. einen Regalboden bilden.

Die Leuchtschicht und die Deckschicht sind fest miteinander verbunden. Vorzugsweise sind die Schichten unlösbar und/oder untrennbar verbunden, z.B. verklebt.

Die Leuchtschicht und die Deckschicht bilden vorzugsweise ein so genanntes Compound, also einen Verbund, z.B. ein Halbzeug. Insbesondere sind die Leuchtschicht und die Deckschicht als ein gemeinsames, flächiges Bauteil ausgebildet. Die Leuchtschicht und die Deckschicht sind vorzugsweise gleich groß und/oder parallel zueinander orientiert. Insbesondere sind die Leuchtschicht und die Deckschicht deckungsgleich.

Die Öffnungsabschnitte können sich von der Deckschicht bis in die Leuchtschicht bzw. in eine Trägerschicht erstrecken. Beispielsweise können die Öffnungsabschnitte, z.B. Schnitte der Öffnungsabschnitte, bis zur und/oder um die Lichtaustrittseinheit reichen.

Die Erfindung betrifft auch die Verwendung der Beleuchtungsvorrichtung als Hauptbeleuchtung. Beispielsweise kann die Beleuchtungsvorrichtung eine Leistung von z.B. mindestens fünf, sechs, sieben, acht, neun, zehn, zwanzig, dreißig, vierzig, fünfzig oder mehr Watt pro Quadratmeter aufweisen.

Die Beleuchtungsvorrichtung kann beispielsweise im Ladenbau eingesetzt werden. Insbesondere kann die Beleuchtungsvorrichtung als Laden- und/oder Regalbeleuchtung ausgebildet sein. Beispielsweise kann die Beleuchtungsvorrichtung im so genannten "Ambient Storelighting" eingesetzt werden, z.B. zur Beleuchtung von Sportartikeln, Bekleidung, Schmuck und/oder Technikprodukten. Die Beleuchtungsvorrichtung kann z.B. als strukturierte Wand ausgebildet sein. Beispielsweise ist ein Warenständer mit einer Strukturlichtrückwand denkbar.

Die Beleuchtungsvorrichtung kann auch beispielsweise als Spezialleuchte, z.B. im Auslagebereich, ausgebildet sein.

Die Beleuchtungsvorrichtung kann insbesondere als Plattenmaterial ausgebildet sein und z.B. in Vielfachen eines Quadratmeters verkauft werden.

Insbesondere kann die Beleuchtungsvorrichtung als Fußbodenbeleuchtung oder als leuchtendes Deckenmaterial ausgebildet sein.

Beispielsweise können sich die Öffnungsabschnitte aufgrund der Krafteinwirkung beim Betreten einer flächigen Fußbodenbeleuchtung öffnen. So ist beispielsweise, zumindest vorübergehend, sichtbar, an welchen Stellen der Fußboden betreten wurde.

Falls die Beleuchtungsvorrichtung als Deckenmaterial eingesetzt wird, können die Öffnungsabschnitte z.B. durch Berühren der Decke geöffnet werden, um so an einer gewünschten Position Licht austreten zu lassen.

Die Beleuchtungsvorrichtung kann auch zu Dekorationszwecken eingesetzt werden. Beispielsweise können Lampen aus dem Compound-Material geformt werden. Die Lampen können in beliebigen Formen, z.B. in Tierformen, ausgebildet sein. So kann z.B. eine Lampe als eine Art Leuchtfisch ausgebildet sein. Die Öffnungsabschnitte können dabei z.B. als Schuppen ausgebildet sein. Wird der Fisch z.B. durch mechanische Krafteinwirkung verformt, so können sich die Schuppen öffnen, sodass Licht austreten kann.

Auch kann die Beleuchtungsvorrichtung z.B. als ein Reflektor bzw. Reflektor-Material ausgebildet sein oder einen Reflektor umfassen.

Die erfindungsgemäße Beleuchtungsvorrichtung ermöglicht somit vielfältige Einsatzmöglichkeiten. Das austretende Licht kann dabei stets auf einfache Weise beeinflusst werden.

Weiterbildungen der Erfindung sind auch den abhängigen Ansprüchen, der Beschreibung sowie den beigefügten Zeichnungen zu entnehmen.

Gemäß einer Ausführungsform weist die Beleuchtungsvorrichtung eine Trägerschicht auf, wobei die Leuchtschicht und die Trägerschicht fest miteinander verbunden sind.

Vorzugsweise sind die Leuchtschicht und die Trägerschicht unlösbar und/oder untrennbar verbunden, z.B. verklebt.

Insgesamt ergibt sich insbesondere ein sandwichartiger Aufbau aus Trägerschicht, Leuchtschicht und Deckschicht.

Vorzugsweise kann die Trägerschicht als Reflexionsschicht ausgebildet sein. Die Trägerschicht kann insbesondere das aus der Leuchtschicht stammende Licht in eine gewünschte Richtung lenken. Hauptsächlich kann die Richtung des austretenden Lichts jedoch durch die Deckschicht beeinflusst werden.

Die Trägerschicht, die Leuchtschicht und/oder die Deckschicht sind vorzugsweise gleich groß und/oder parallel zueinander orientiert. Insbesondere sind die Trägerschicht und die Leuchtschicht deckungsgleich.

Zusätzlich zur Trägerschicht können auch weitere Schichten vorgesehen sein. So ist beispielsweise eine Farbfolie zwischen der Leuchtschicht und der Deckschicht möglich.

Die Trägerschicht und gegebenenfalls weitere Schichten sind insbesondere flächig und z.B. biegsam oder starr ausgebildet, beispielsweise folienartig oder plattenartig. Auf diese Weise kann die Trägerschicht z.B. gebogen werden. Eine individuelle Anpassung an den jeweiligen Bestimmungsort wird dadurch ermöglicht. Eine starre Trägerschicht kann beispielsweise bei einer Verwendung als Laden- und/oder Regalbeleuchtung sinnvoll sein. So kann die Beleuchtungsvorrichtung z.B. einen Regalboden bilden.

Gemäß einer weiteren Ausführungsform sind die Öffnungsabschnitte stufenlos zwischen der Warteposition und der Leuchtposition verstellbar. Es ist insbesondere kein Raster mit vordefinierten Rastpositionen vorgesehen. So können die Öffnungsabschnitte in beliebige Zwischenpositionen zwischen einer vollständig geschlossenen Warteposition und einer vollständig geöffneten Leuchtposition verstellt werden.

Durch die stufenlose Verstellbarkeit kann z.B. die Helligkeit der Beleuchtungsvorrichtung beliebig eingestellt werden.

Nach einer weiteren Ausführungsform sind die Öffnungsabschnitte jeweils individuell zwischen der Warteposition und der Leuchtposition verstellbar. So können sich beispielsweise einige Öffnungsabschnitte in der Leuchtposition befinden, während andere Öffnungsabschnitte in der Warteposition sind.

Insbesondere ist kein gleichmäßiges Öffnen bzw. Schließen über die gesamte Deckschicht vorgesehen, wobei dies, beispielsweise über eine entsprechende Ansteuerung, ebenso grundsätzlich möglich ist.

Gemäß einer weiteren Ausführungsform sind die Öffnungsabschnitte durch eine mechanische Krafteinwirkung zwischen der Warteposition und der Leuchtposition verstellbar. Insbesondere können die Trägerschicht, die Leuchtschicht und/oder die Deckschicht durch die Krafteinwirkung verformt werden. Dabei können sich einzelne oder sämtliche Öffnungsabschnitte öffnen.

Beispielsweise kann ein Benutzer mit seiner Hand oder seinem Fuß an einer bestimmten Stelle auf die Beleuchtungsvorrichtung drücken. Durch die Krafteinwirkung können sich die Öffnungsabschnitte im Bereich dieser Druckstelle zumindest teilweise öffnen.

Die Bedienung der Beleuchtungsvorrichtung erfolgt somit auf sehr einfache Weise.

Die Öffnungsabschnitte können in der entsprechenden Position verbleiben. Dies kann z.B. durch das Material der Trägerschicht, der Leuchtschicht und/oder der Deckschicht gewährlistet werden. Beispielswiese kann eine Schicht, insbesondere die Trägerschicht, ein Drahtgeflecht umfassen und dadurch in der gewünschten Position verbleiben.

Beispielsweise kann eine Ladenbeleuchtung oder eine Lampe auf diese Weise an- bzw. ausgeschaltet werden.

Alternativ kann die Beleuchtungsvorrichtung auch reversibel ausgebildet sein. So können die Öffnungsabschnitte beispielsweise wieder von selbst aus der Leuchtposition in die Warteposition zurückkehren.

Beispielsweise können sich die Öffnungsabschnitte aufgrund der Krafteinwirkung beim Betreten einer flächigen Fußbodenbeleuchtung kurzzeitig öffnen. So können die Stellen, an denen der Fußboden betreten wurde, beispielsweise vorübergehend sichtbar werden.

Die Krafteinwirkung kann manuell erfolgen, z.B. durch Belastung, Ziehen, Drücken, Biegen und/oder Umformen. Auch kann die Krafteinwirkung magnetisch, elektrisch und/oder motorisch erfolgen, beispielsweise mittels einer Steuerung.

Nach einer weiteren Ausführungsform ist durch die Verstellung der Öffnungsabschnitte die Helligkeit, die Abstrahlrichtung und/oder der Abstrahlwinkel veränderbar.

Das aus der Beleuchtungsvorrichtung austretende Licht kann auf vielfältige Weise beeinflusst werden. Die Helligkeit, die Abstrahlrichtung und/oder der Abstrahlwinkel hängen insbesondere von der Position und/oder Stärke der Krafteinwirkung ab. Um die Helligkeit zu verändern, können z.B. die Öffnungsabschnitte weiter oder weniger weit geöffnet werden. Die Abstrahlrichtung und/oder der Abstrahlwinkel kann z.B. durch ein Biegen der Beleuchtungsvorrichtung eingestellt werden. Gemäß einer weiteren Ausführungsform ist wenigstens ein Öffnungsabschnitt als Lamelle, Schuppe, Wabe, Blende und/oder verschließbare Pore ausgebildet.

Die Öffnungsabschnitte können insbesondere in die Deckschicht und/oder Leuchtschicht eingebracht werden, z.B. geschnitten, geschlitzt, gestanzt, gestrahlt, z.B. wasser- oder sandgestrahlt, und/oder gelasert. Vorzugsweise erfolgt dabei kein oder nur ein geringer Materialaustrag, d.h. es wird insbesondere zumindest im Wesentlichen kein Material weggenommen.

Insbesondere weisen die Öffnungsabschnitte keine Löcher auf, sondern Einschnitte und/oder Schlitze.

Vorzugsweise werden die Schichten zunächst miteinander verbunden. Anschließend werden die Öffnungsabschnitte eingebracht. Alternativ können auch erst die Öffnungsabschnitte eingebracht und die Schichten anschließend miteinander verbunden werden.

Ist das Material beispielsweise plattenartig ausgebildet, kann dieses auch erst durch das Einbringen der Öffnungsabschnitte biegsam gemacht werden. Dies ist vergleichbar wie bei so genannten "lasercut living hinges", also lasergeschnittenen Scharnieren, bei denen feste Materialien wie Holz oder Metall durch Einschnitte flexible Eigenschaften erhalten.

Nach einer weiteren Ausführungsform weisen die Öffnungsabschnitte abgewinkelte Ränder auf. Die Ränder erstrecken sich vorzugsweise nicht in einem 90°-Winkel, wobei dies grundsätzlich möglich ist.

Vorzugsweise werden die Öffnungsabschnitte schräg eingebracht. Je nach Winkel ergibt sich eine unterschiedliche Brechung an den Rändern, also z.B. an der Schnittkante. Durch die abgewinkelte Schnittkante kann das austretende Licht gezielt beeinflusst werden.

Gemäß einer weiteren Ausführungsform sind die Öffnungsabschnitte gleichmäßig über die Deckschicht verteilt angeordnet. Beispielsweise können die Öffnungsabschnitte rasterförmig angeordnet sein. Die Öffnungsabschnitte können insbesondere nebeneinander oder versetzt zueinander angeordnet sein.

Jeder Bereich der Beleuchtungsvorrichtung kann hierbei grundsätzlich Licht emittieren.

Alternativ können die Öffnungsabschnitte auch lediglich in Teilbereichen vorgesehen sein. So können z.B. Teilbereiche vorgesehen sein, an denen kein Licht emittiert werden kann. Dadurch können Kosten eingespart werden.

Nach einer weiteren Ausführungsform umfasst die Lichtaustrittseinheit ein Beleuchtungsmittel, insbesondere eine LED, oder besteht daraus.

Das Beleuchtungsmittel ist insbesondere als aktive Lichtquelle ausgebildet, z.B. als OLED.

Vorzugsweise sind eine Vielzahl an LEDs in der Leuchtschicht angeordnet, welche z.B. über Leitungen mit Energie versorgt werden.

Beispielsweise kann wenigstens eine rote, grüne, blaue, cyan, magenta, gelbe oder weiße LED vorgesehen sein. Insbesondere kann die Beleuchtungsvorrichtung insgesamt weißes oder buntes Licht aussenden.

Gemäß einer weiteren Ausführungsform umfasst die Lichtaustrittseinheit einen Lichtleiter oder besteht daraus.

So ist insbesondere eine passive Lichtquelle möglich, welche die Lichtaustrittseinheit bildet. Das Licht kann vorzugsweise in der Leuchtschicht aus dem Lichtleiter ausgekoppelt werden.

Unabhängig davon, ob eine aktive oder passive Lichtquelle vorgesehen ist, wird das Licht jedenfalls stets im Inneren der Beleuchtungsvorrichtung ausgekoppelt. Die Beleuchtungsvorrichtung stellt selbst Licht zur Verfügung und wird z.B. nicht von außen angeleuchtet.

Nach einer weiteren Ausführungsform weist die Leuchtschicht, die Deckschicht und/oder eine Trägerschicht eine Gesamtdicke von maximal 3,5 cm, insbesondere von maximal 1 cm, bevorzugt von maximal 0,5 cm, auf.

Beispielsweise kann die Deckschicht eine Dicke zwischen 0,15 mm und 3 mm aufweisen. Die Deckschicht kann z.B. als Folie oder dünnes Flächenmaterial ausgebildet sein.

Die Leuchtschicht kann z.B. eine Dicke zwischen 1,5 mm und 5 mm aufweisen. Insbesondere kann die Deckschicht z.B. als dünnes Plattenmaterial ausgebildet sein.

Beispielsweise kann die Trägerschicht eine Dicke zwischen 0,15 mm und 25 mm aufweisen. Die Trägerschicht kann z.B. als Folie, dünnes oder starkes Flächenmaterial ausgebildet sein.

Auch die Gesamtdicke der Beleuchtungsvorrichtung ist auf diese Weise äußerst dünn. Vorzugsweise liegt die Gesamtdicke aller Schichten zwischen 1 mm und 40 mm, z.B. zwischen 1,5 mm und 33 mm.

Dadurch wird insbesondere die Biegbarkeit der Beleuchtungsvorrichtung ermöglicht.

Die Erfindung betrifft auch ein Verfahren zur Herstellung einer erfindungsgemäßen Beleuchtungsvorrichtung.

Eine flächige Leuchtschicht mit wenigstens einer Lichtaustrittseinheit und eine flächige Deckschicht werden fest miteinander verbunden, beispielsweise verklebt. Vorher oder anschließend werden mehrere Öffnungsabschnitte in die Deckschicht und/oder die Leuchtschicht eingebracht.

Dies erfolgt vorzugsweise zumindest im Wesentlichen ohne Materialverlust.

Beispielsweise kann, insbesondere bei plattenartigen Schichten, die Biegbarkeit auch erst durch das Einbringen der Öffnungsabschnitte hergestellt werden.

Alle hier beschriebenen Ausführungsformen und Bauteile der Vorrichtung sind insbesondere dazu ausgebildet, nach dem hier beschriebenen Verfahren hergestellt zu werden. Ferner können alle hier beschriebenen Ausführungsformen der Vorrichtung sowie alle hier beschriebenen Ausführungsformen des Verfahrens jeweils miteinander kombiniert werden, insbesondere auch losgelöst von der konkreten Ausgestaltung, in deren Zusammenhang sie erwähnt werden.

Die Erfindung wird im Folgenden beispielhaft unter Bezugnahme auf die Zeichnungen beschrieben. Es zeigen:
- Fig. 1: eine Perspektivansicht einer Ausführungsform einer erfindungsgemäßen Beleuchtungsvorrichtung in einer Warteposition,
- Fig. 2: eine teilgeschnittene Perspektivansicht der Beleuchtungsvorrichtung gemäß Fig. 1,
- Fig. 3: eine Perspektivansicht der Beleuchtungsvorrichtung gemäß Fig. 1 in einer Leuchtposition,
- Fig. 4: eine geschnittene Seitenansicht einer Ausführungsform einer erfindungsgemäßen Beleuchtungsvorrichtung,
- Fig. 5: eine geschnittene Seitenansicht einer weiteren Ausführungsform einer erfindungsgemäßen Beleuchtungsvorrichtung,
- Fig. 6: eine geschnittene Seitenansicht einer weiteren Ausführungsform einer erfindungsgemäßen Beleuchtungsvorrichtung, und
- Fig. 7: eine Perspektivansicht einer weiteren Ausführungsform einer erfindungsgemäßen Beleuchtungsvorrichtung in einer Leuchtposition.

Zunächst ist zu bemerken, dass die dargestellten Ausführungsformen rein beispielhafter Natur sind. So können einzelne Merkmale nicht nur in der gezeigten Kombination, sondern auch in Alleinstellung oder in anderen technisch sinnvollen Kombinationen realisiert sein. Beispielsweise können die Merkmale einer Ausführungsform beliebig mit Merkmalen einer anderen Ausführungsform kombiniert werden. Insbesondere kann die Anzahl, Form und/oder Position der Öffnungsabschnitte variieren. Ferner ist auch die dargestellte Trägerschicht rein optional.

Enthält eine Figur ein Bezugszeichen, welches im unmittelbar zugehörigen Beschreibungstext nicht erläutert wird, so wird auf die entsprechenden vorhergehenden bzw. nachfolgenden Ausführungen in der Figurenbeschreibung Bezug genommen. So werden für gleiche bzw. vergleichbare Bauteile in den Figuren dieselben Bezugszeichen verwendet und diese nicht nochmals erläutert.

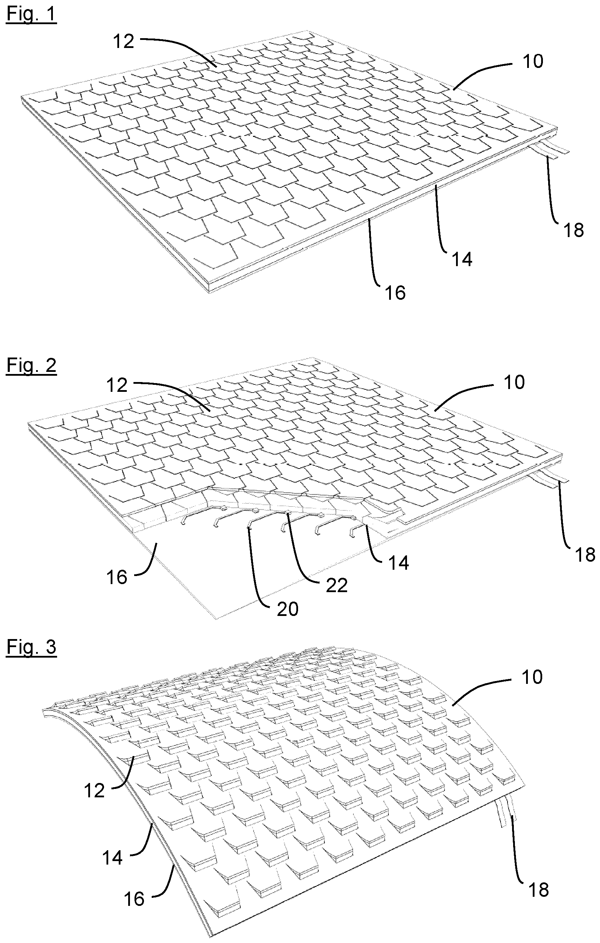

Fig. 1 zeigt eine Beleuchtungsvorrichtung mit einem sandwichartigen Aufbau. Die als Verbundmaterial ausgebildete Beleuchtungsvorrichtung umfasst eine Deckschicht 10 mit mehreren, wabenförmigen Öffnungsabschnitten 12, eine Leuchtschicht 14 sowie eine Trägerschicht 16. Die Leuchtschicht 14 ist zwischen der Deckschicht 10 und der Trägerschicht 16 angeordnet. Die Öffnungsabschnitte 12 können sich zumindest teilweise bis in die Leuchtschicht 14 und/oder die Trägerschicht 16 hinein erstrecken.

Über einen Anschluss 18 kann die Leuchtschicht 14 mit Strom versorgt werden.

Die Schichten 10, 14, 16 sind flächig und biegsam ausgebildet. Die Form ist grundsätzlich beliebig, vorzugsweise rechteckförmig, z.B. quadratisch. Insbesondere kann ein Rahmen vorgesehen sein, der die Schichten 10, 14, 16 umgibt bzw. in oder auf dem die Schichten 10, 14, 16 angeordnet sind.

Die Schichten 10, 14, 16 sind insbesondere parallel zueinander orientiert und/oder deckungsgleich. Vorzugsweise sind die Schichten 10, 14, 16 fest und unlösbar miteinander verbunden, z.B. verklebt.

Wie in Fig. 2 zu sehen ist, weist die Leuchtschicht 14 mehrere, an Leiterbahnen 20 angeordnete und als LEDs 22 ausgebildete Lichtaustrittseinheiten auf.

In der Warteposition sind die Öffnungsabschnitte 12 geschlossen. Dadurch wird selbst bei angeschalteten Lichtaustrittseinheiten 22 verhindert, dass Licht nach außen tritt.

Fig. 3 zeigt eine Beleuchtungsvorrichtung während bzw. nach einer mechanischen Krafteinwirkung. Durch das Biegen der Beleuchtungsvorrichtung sind die Öffnungsabschnitte 12 aus der Warteposition in eine geöffnete Leuchtposition verstellt.

In dieser Leuchtposition kann Licht aus der Beleuchtungsvorrichtung austreten.

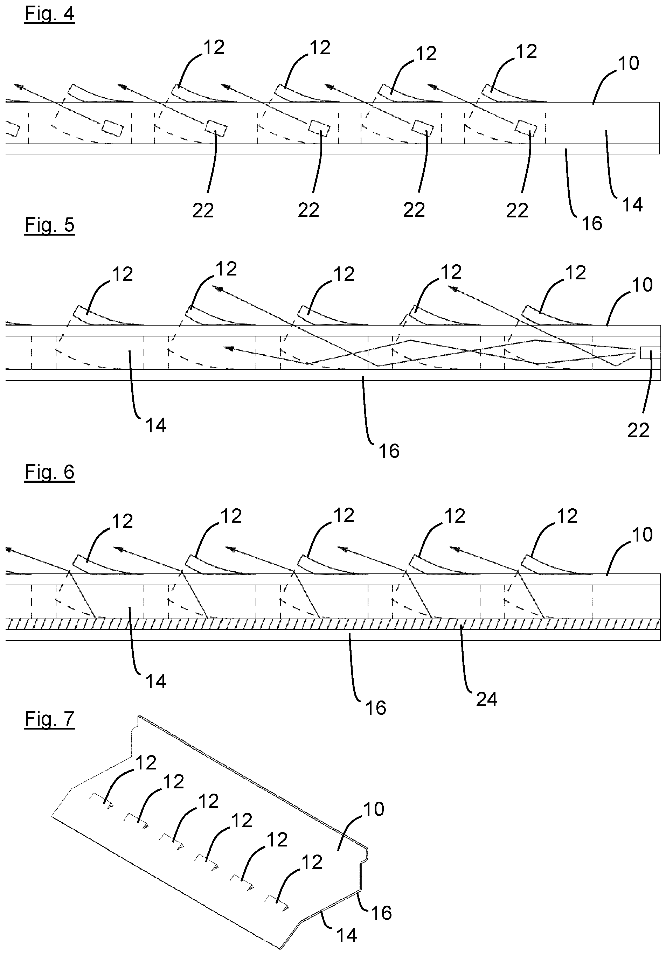

Bei der Ausführungsform, welche in Fig. 4 dargestellt ist, sind in der Leuchtschicht 14 mehrere LEDs 22 vorgesehen, welche die Lichtaustrittseinheiten bilden.

Wie in Fig. 5 gezeigt ist, kann auch nur eine bzw. nur wenige Lichtaustrittseinheiten 22, z.B. LEDs oder Lichtleiter, vorgesehen sein. Die Lichtaustrittseinheiten 22 können beispielsweise seitlich, z.B. in einem Rahmen, angeordnet sein. Die Leuchtschicht 14 kann ein transparentes und/oder lichtleitendes Material aufweisen, um das Licht transportieren zu können.

Die Trägerschicht 16 kann beispielsweise als Reflexionsschicht ausgebildet sein. Auftreffendes Lichts wird somit reflektiert.

Die Lichtaustrittseinheit kann auch, wie in Fig. 6 gezeigt ist, einen Lichtleiter 24 aufweisen. Der Lichtleiter 24 kann beispielsweise flächig ausgebildet sein. Insbesondere können mehrere Lichtleiter-Schichten vorgesehen sein. Alternativ oder zusätzlich kann auch die Leuchtschicht 14 als Lichtleiter ausgebildet sein.

Das aus dem Lichtleiter 24 stammende Licht kann durch die Öffnungsabschnitte 12 aus der Beleuchtungsvorrichtung austreten.

Bei der in Fig. 7 gezeigten Ausführungsform ist die Trägerschicht 16 plattenartig, insbesondere starr, ausgebildet, beispielsweise als Blech. Die Deckschicht 10 kann ebenfalls plattenartig, insbesondere starr oder aber biegsam, ausgebildet sein.

Die Beleuchtungsvorrichtung kann somit insgesamt starr sein und z.B. als Regalboden eingesetzt werden.

### Bezugszeichenliste

- 10: Deckschicht
- 12: Öffnungsabschnitt
- 14: Leuchtschicht
- 16: Trägerschicht
- 18: Anschluss
- 20: Leiterbahn
- 22: LED, Lichtaustrittseinheit
- 24: Lichtleiter

## Patentansprüche

1. Beleuchtungsvorrichtung, umfassend
eine flächige, biegsame Leuchtschicht (14), wobei die Leuchtschicht (14) wenigstens eine Lichtaustrittseinheit (22) aufweist, und
eine flächige, insbesondere biegsame, Deckschicht (10) mit mehreren Öffnungsabschnitten (12), die zwischen einer geschlossenen Warteposition und einer geöffneten Leuchtposition verstellbar sind, wobei die Leuchtschicht (14) und die Deckschicht (10) fest miteinander verbunden sind.

2. Beleuchtungsvorrichtung nach Anspruch 1,
**dadurch gekennzeichnet,**
**dass** eine Trägerschicht (16) vorgesehen ist, wobei die Leuchtschicht (14) und die Trägerschicht (16) fest miteinander verbunden sind.

3. Beleuchtungsvorrichtung nach Anspruch 1 oder 2,
**dadurch gekennzeichnet,**
**dass** die Öffnungsabschnitte (12) stufenlos zwischen der Warteposition und der Leuchtposition verstellbar sind.

4. Beleuchtungsvorrichtung nach einem der vorhergehenden Ansprüche,
**dadurch gekennzeichnet,**
**dass** die Öffnungsabschnitte (12) jeweils individuell zwischen der Warteposition und der Leuchtposition verstellbar sind.

5. Beleuchtungsvorrichtung nach einem der vorhergehenden Ansprüche,
**dadurch gekennzeichnet,**
**dass** die Öffnungsabschnitte (12) durch eine mechanische Krafteinwirkung zwischen der Warteposition und der Leuchtposition verstellbar sind.

6. Beleuchtungsvorrichtung nach einem der vorhergehenden Ansprüche,
**dadurch gekennzeichnet,**
**dass** durch die Verstellung der Öffnungsabschnitte (12) die Helligkeit, die Abstrahlrichtung und/oder der Abstrahlwinkel veränderbar ist.

7. Beleuchtungsvorrichtung nach einem der vorhergehenden Ansprüche,
**dadurch gekennzeichnet,**
**dass** wenigstens ein Öffnungsabschnitt (12) als Lamelle, Schuppe, Wabe, Blende und/oder verschließbare Pore ausgebildet ist.

8. Beleuchtungsvorrichtung nach einem der vorhergehenden Ansprüche,
**dadurch gekennzeichnet,**
**dass** die Öffnungsabschnitte (12) abgewinkelte Ränder aufweisen.

9. Beleuchtungsvorrichtung nach einem der vorhergehenden Ansprüche,
**dadurch gekennzeichnet,**
**dass** die Öffnungsabschnitte (12) gleichmäßig über die Deckschicht (10) verteilt angeordnet sind.

10. Beleuchtungsvorrichtung nach einem der vorhergehenden Ansprüche,
**dadurch gekennzeichnet,**
**dass** die Lichtaustrittseinheit (22) ein Beleuchtungsmittel, insbesondere eine LED, umfasst oder daraus besteht.

11. Beleuchtungsvorrichtung nach einem der vorhergehenden Ansprüche,
**dadurch gekennzeichnet,**
**dass** die Lichtaustrittseinheit einen Lichtleiter (24) umfasst oder daraus besteht.

12. Beleuchtungsvorrichtung nach einem der vorhergehenden Ansprüche,
**dadurch gekennzeichnet,**
**dass** die Leuchtschicht (14), die Deckschicht (10) und/oder eine Trägerschicht (16) eine Gesamtdicke von maximal 3,5 cm, insbesondere von maximal 1 cm, bevorzugt von maximal 0,5 cm, aufweist.

13. Verfahren zur Herstellung einer Beleuchtungsvorrichtung nach einem der vorhergehenden Ansprüche, bei dem
eine flächige Leuchtschicht (14) mit wenigstens einer Lichtaustrittseinheit (22) und eine flächige Deckschicht (10) fest miteinander verbunden werden, und
mehrere Öffnungsabschnitte (12) in die Deckschicht (10) und/oder Leuchtschicht (14) eingebracht werden.

## Claims

1. Illumination device comprising
a broad-area, flexible illumination layer (14), wherein the illumination layer (14) has at least one light-emitting unit (22), and
a broad-area, in particular flexible, top layer (10) with a plurality of aperture sections (12) which can be adjusted between a closed waiting position and an open illumination position, wherein
the illumination layer (14) and the top layer (10) are fixedly connected to one another.

2. Illumination device according to claim 1,
**characterised in that**
a carrier layer (16) is provided, wherein the illumination layer (14) and the carrier layer (16) are fixedly connected to one another.

3. Illumination device according to claims 1 or 2,
**characterised in that**
the aperture sections (12) are infinitely adjustable between the waiting position and the illumination position.

4. Illumination device according to any of the preceding claims,
**characterised in that**
the aperture sections (12) are individually adjustable between the waiting position and the illumination position.

5. Illumination device according to any of the preceding claims,
**characterised in that**
the aperture sections (12) can be adjusted between the waiting position and the illumination position by a mechanical force.

6. Illumination device according to any of the preceding claims,
**characterised in that**
the brightness, the beam direction and/or the beam angle can be changed by adjusting the aperture sections (12).

7. Illumination device according to any of the preceding claims,
**characterised in that**
at least one aperture section (12) is formed as a lamella, scale, honeycomb, diaphragm and/or closable pore.

8. Illumination device according to any of the preceding claims,
**characterised in that**
the aperture sections (12) have angled edges.

9. Illumination device according to any of the preceding claims,
**characterised in that**
the aperture sections (12) are disposed in a uniform distribution over the top layer (10).

10. Illumination device according to any of the preceding claims,
**characterised in that**
the light-emitting unit (22) comprises or consists of a lighting means, in particular a LED.

11. Illumination device according to any of the preceding claims,
**characterised in that**
the light-emitting unit comprises or consists of a light guide (24).

12. Illumination device according to any of the preceding claims,
**characterised in that**
the illumination layer (14), the top layer (10) and/or a carrier layer (16) has a total thickness of at most 3.5 cm, in particular of at most 1 cm, preferably of at most 0.5 cm.

13. Method for producing an illumination device according to any of the preceding claims, in which
a broad-area illumination layer (14) having at least one light-emitting unit (22) and a broad-area top layer (10) are fixedly connected to one another, and
a plurality of aperture sections (12) are introduced into the top layer (10) and/or illumination layer (14).

## Revendications

1. Dispositif d'éclairage, comprenant
une couche lumineuse (14) surfacique flexible, la couche lumineuse (14) présentant au moins une unité de sortie de lumière (22), et
une couche de couverture (10) surfacique, en particulier flexible, présentant plusieurs portions d'ouverture (12) qui peuvent être déplacées entre une position d'attente fermée et une position d'éclairage ouverte,
la couche lumineuse (14) et la couche de couverture (10) étant reliées de manière fixe l'une à l'autre.

2. Dispositif d'éclairage selon la revendication 1,
**caractérisé en ce que**
il est prévu une couche de support (16), la couche lumineuse (14) et la couche de support (16) étant reliées de manière fixe l'une à l'autre.

3. Dispositif d'éclairage selon la revendication 1 ou 2,
**caractérisé en ce que**
les portions d'ouverture (12) peuvent être déplacées en continu entre la position d'attente et la position d'éclairage.

4. Dispositif d'éclairage selon l'une des revendications précédentes,
**caractérisé en ce que**
les portions d'ouverture (12) peuvent chacune être déplacées individuellement entre la position d'attente et la position d'éclairage.

5. Dispositif d'éclairage selon l'une des revendications précédentes,
**caractérisé en ce que**
les portions d'ouverture (12) peuvent être déplacées entre la position d'attente et la position d'éclairage par une action de force mécanique.

6. Dispositif d'éclairage selon l'une des revendications précédentes,
**caractérisé en ce que**
la luminosité, la direction de rayonnement et/ou l'angle de rayonnement peuvent être modifiés par le déplacement des portions d'ouverture (12).

7. Dispositif d'éclairage selon l'une des revendications précédentes,
**caractérisé en ce que**
au moins une portion d'ouverture (12) est réalisée sous forme de lamelle, d'écaille, de nid d'abeille, de cache et/ou de pore susceptible d'être refermé.

8. Dispositif d'éclairage selon l'une des revendications précédentes,
**caractérisé en ce que**
les portions d'ouverture (12) présentent des bords coudés.

9. Dispositif d'éclairage selon l'une des revendications précédentes,
**caractérisé en ce que**
les portions d'ouverture (12) sont disposées de manière uniformément répartie sur la couche de couverture (10).

10. Dispositif d'éclairage selon l'une des revendications précédentes,
**caractérisé en ce que**
l'unité de sortie de lumière (22) comprend ou consiste en un moyen d'éclairage, en particulier en une DEL.

11. Dispositif d'éclairage selon l'une des revendications précédentes,
**caractérisé en ce que**
l'unité de sortie de lumière comprend ou consiste en un guide de lumière (24).

12. Dispositif d'éclairage selon l'une des revendications précédentes,
**caractérisé en ce que**
la couche lumineuse (14), la couche de couverture (10) et/ou une couche de support (16) ont une épaisseur totale de 3,5 cm au maximum, en particulier de 1 cm au maximum, de préférence de 0,5 cm au maximum.

13. Procédé de fabrication d'un dispositif d'éclairage selon l'une des revendications précédentes,
dans lequel
une couche lumineuse surfacique (14) comportant au moins une unité de sortie de lumière (22) et une couche de couverture surfacique (10) sont reliées de manière fixe l'une à l'autre, et
plusieurs portions d'ouverture (12) sont ménagées dans la couche de couverture (10) et/ou la couche lumineuse (14).
